# EUROPÄISCHE PATENTANMELDUNG

(11) **EP 0 757 900 A1**
(43) Veröffentlichungstag der Anmeldung: **12.02.1997**
(21) Anmeldenummer: 96112469.0
(22) Anmeldetag: 01.08.1996
(51) Int. Cl.: A47J 37/06

(54) **Grillschale**

(30) Priorität: 07.08.1995 DE 19529005
(71) Anmelder: ALCAN DEUTSCHLAND GMBH, D-37075 Göttingen (DE)
(72) Erfinder: Wingenbach, Werner, 58511 Lüdenscheid (DE)
(74) Vertreter: Görg, Klaus, Dipl.-Ing.

(57) **Zusammenfassung**

Eine Grillschale aus einer Metallfolie weist voneinander beabstandete Saftrillen (4) mit dazwischenliegenden, hochragenden Wülsten (5) auf, wobei die Wulstrücken (6) eine Grillebene bilden. Die Wülste (5) sind in ihren ansteigenden Seitenwänden mit Gasdurchtrittsöffnungen (8) versehen, wobei zumindest ein Teilabschnitt des Randes einer Gasdurchtrittsöffnung (8) zur Grillschalenoberseite hin eingerollt ist.

## Beschreibung

Die Erfindung betrifft eine Grillschale nach dem Oberbegriff des Anspruchs 1.

Eine derartige Grillschale ist durch das deutsche Gebrauchsmuster G 92 02 165 bekannt. Bei dieser bekannten Grillschale können während des Grillvorganges aus dem Grillgut austretendes Fett und Bratensaft in die Saftrillen abfließen und das Grillgut gegrillt werden, ohne daß es dabei in Fett und Bratensaft liegt. Die in den ansteigenden Seitenwänden angeordneten Gasdurchtrittsöffnungen ermöglichen, daß die unterhalb der Grillschale aufsteigenden aromatischen Grillgase durch diese Öffnungen hindurch direkt an das zu grillende Gut gelangen können. Die Gasdurchtrittsöffnungen haben Schlitze, die am oberen Rand von muldenförmigen Niederdrückungen in den Wulstseitenwänden ausgebildet sind. Somit können die Grillgase durch die Schlitze hindurchströmen, während andererseits aus dem Grillgut austretendes Fett und Saft nicht durch die Schlitze hindurchtreten können, sondern aus den schrägstehenden Mulden in die Saftrillen ablaufen.

Bei einer solchen Grillschale wird somit erreicht, daß das Grillgut im wesentlichen durch das direkte Umstreichen von heißen Grillgasen und nicht durch die Abstrahlungswärme der Grillschale gegart wird, wodurch der typische Grillgeschmack des Grillgutes erhalten und die Grillzeit verkürzt wird. Dies wird erreicht, ohne daß aus dem Grillgut austretende Garflüssigkeiten in die unter der Grillschale befindliche Glut abtropfen, so daß das Verbrennen von Fett und Bratensaft und die dadurch gegebene Entwicklung von ungesunden Verbrennungsgasen vermieden wird.

Die Herstellung der muldenförmigen Niederdrückungen macht bei der bekannten Grillschale jedoch erhebliche Probleme, da sie nur an der bereits vorgefertigten Grillschale in einem zusätzlichen Arbeitsgang mittels eines gesonderten Schneid- und Prägewerkzeuges ausgeführt werden können. Außerdem erfordern sie zu einer einwandfreien Formgebung eine gewisse Materialdehnung innerhalb des Muldenbereichs gegenüber den angrenzenden Bereichen der Wulstseitenwände. Anderenfalls würde eine Verzerrung dieser Seitenwandbereiche eintreten.

Eine weitere Grillschale ist aus der DE 42 36 773 A1 bekannt und kann gegenüber der oben beschriebenen Grillschale mit geringerem Material- und Fertigungsaufwand hergestellt werden. Hierzu sind die Seitenwände der Wülste an den Rändern der Gasdurchtrittsöffnungen zur Oberseite der Grillschale hin hochgebogen bzw. hochgewölbt. Die Gasdurchtrittsöffnungen dieser bekannten Grillschale weisen jedoch eine minimale Weite von ca. 1 mm auf, damit ein Durchtropfen von Bratensaft und/oder Fett in die Glut nicht möglich ist und damit das Durchschlagen von Flammen auf das Grillgut wirksam verhindert wird. Derartig kleine und schmale Gasdurchtrittsöffnungen können jedoch durch sich festbrennende Grillgewürze und/oder Grillfette zugesetzt werden, was ein wirksames Grillen verhindert.

Es ist deshalb das der Erfindung zugrundeliegende Problem, eine Grillschale zu schaffen, die mit geringem Material- und Fertigungsaufwand hergestellt werden kann, wobei ein gutes Umströmen des Grillgutes von Grillgasen auch bei längerer Grilldauer gewährleistet ist.

Die Lösung dieser Aufgabe erfolgt durch die Merkmale des Anspruchs 1 und insbesondere dadurch, daß zumindest ein Teilabschnitt des Randes einer Gasdurchtrittsöffnung zur Grillschalenoberseite hin eingerollt ist. Durch diese erfindungsgemäße Ausbildung des Randes der Gasdurchtrittsöffnung wird ein ausgezeichnetes Ableiten der Grillfette und -säfte an den Gasdurchtrittsöffnungen vorbei bewirkt, wodurch keine dieser Flüssigkeiten durch die Öffnungen hindurch tropft und anschließend gesundheitsschädliche Verbrennungsgase hervorruft. Gleichzeitig kann durch die erfindungsgemäß vorgesehenen Randrollungen die Gasdurchtrittsöffnung wesentlich größer sein, als dies bei der DE 42 36 773 A1 der Fall ist, da ein Ablaufen des Grillsaftes in die Glut durch die eingerollten Ränder verhindert ist. Die größeren Gasdurchtrittsöffnungen können durch Grillgewürze bzw. Grillflüssigkeiten nicht mehr zugesetzt werden und ermöglichen gleichzeitig ein wesentlich besseres Umstreichen des Grillgutes mit den Grillgasen sowie einen höheren Anteil an direkter Wärmestrahlung der Glut auf das Grillgut. Hierdurch wird ein sehr schmackhaftes, gut gebräuntes aber nicht verbranntes Grillgut erhalten. Verglichen mit den Gasdurchtrittsöffnungen, die in dem eingangs genannten G 92 02 165.4 beschrieben sind, müssen bei der erfindungsgemäßen Grillschale die von der Glut aufsteigenden Grillgase nicht erst an den Wulstrücken umgelenkt werden, sondern sie können unmittelbar durch die erfindungsgemäßen Gasdurchtrittsöffnungen in Richtung des Grillgutes strömen.

Durch das erfindungsgemäße Einrollen des Teilabschnittes des Randes einer Gasdurchtrittsöffnung wird an der Gasdurchtrittsöffnung ein "dachrinnenartiger" Abschnitt vorgesehen, der die herabfließende Grillflüssigkeit an der Gasdurchtrittsöffnung vorbeilenkt, so daß diese nicht in die Glut sondern in die Saftrillen tropft.

Vorteilhafte Ausführungsformen der Erfindung sind durch die Unteransprüche gekennzeichnet.

Nach einer besonders vorteilhaften Ausführungsform der Erfindung ist der Teilabschnitt des Randes einer Gasdurchtrittsöffnung soweit eingerollt, daß dessen stirnseitige Kante nicht mehr fühlbar ist. Durch diese Ausführungsform ist die Verletzungsgefahr durch scharfkantige Öffnungsränder vollkommen ausgeschlossen, da die stirnseitige Kante des eingerollten Teilabschnittes, die bei Berührung unter Umständen zu Verletzungen führen kann, soweit eingerollt ist, daß eine Verletzung durch die handhabende Person ausscheidet. Gleichzeitig wird bei dieser Ausführungsform ein hervorragendes Ableiten der Grillflüssigkeiten gewährleistet, da diese entlang der Seitenwände nach unten in die Rinne fließen, die durch den eingerollten Teilabschnitt gebildet wird. Von dort werden die Grillflüssigkeiten an der Gasdurchtrittsöffnung vorbei in Richtung der Saftrille geleitet.

Nach einer weiteren Ausbildung der Erfindung können die Gasdurchtrittsöffnungen zumindest zwei geradlinige Teilabschnitte aufweisen, die unter einem Winkel zueinander verlaufen. Durch eine derartige Ausführungsform verteilt sich die an den Seitenwänden herabfließende Grillflüssigkeit auf zwei Teilabschnitte, so daß die eingerollten Abschnitte nicht "überschwemmt" werden, sondern die Grillflüssigkeit gleichmäßig in den Saftrillen abgeleitet wird, ohne durch die Gasdurchtrittsöffnungen in die Glut zu tropfen.

Nach einer weiteren vorteilhaften Ausführungsform der Erfindung verläuft der Teilabschnitt unter einem Winkel zur Grillebene und ist vorzugsweise oberhalb der Gasdurchtrittsöffnung angeordnet. Durch diese Ausbildung ist in jedem Fall sichergestellt, daß die Grillflüssigkeit innerhalb des eingerollten Teilabschnitts nach unten abläuft und nicht durch die Gasdurchtrittsöffnung tropfen kann.

Nach einer weiteren Ausbildung der Erfindung weist die Gasdurchtrittsöffnung eine untere Basislinie auf, die keinen eingerollten Rand besitzt und die vorzugsweise parallel zur Grillebene verläuft. Durch diese vorteilhafte Ausführungsform läßt sich die Gasdurchtrittsöffnung mit dem eingerollten Teilabschnitt sehr einfach herstellen. Gleichzeitig ist gewährleistet, daß durch die parallel zur Grillebene verlaufende untere Basislinie keine Grillflüssigkeit seitlich durch die Gasdurchtrittsöffnung tropfen kann.

Nach einer weiteren Ausbildung der Erfindung kann die Gasdurchtrittsöffnung dreieckig oder trapezförmig ausgebildet sind. Jedoch sind hier auch andere geometrische Formen denkbar.

Nach einer weiteren besonders vorteilhaften Ausführungsform der Erfindung erstreckt sich die Gasdurchtrittsöffnung in Richtung der ansteigenden Seitenwände nicht mehr als ein Drittel der Wulsthöhe. Durch diese Ausführungsform ist bei mittiger Anordnung der Gasdurchtrittsöffnung gewährleistet, daß die Gasdurchtrittsöffnung nicht in den direkten Auflagebereich des Grillgutes kommt. Andererseits ist sichergestellt, daß keine in der Saftrille befindliche Grillflüssigkeit in die Glut läuft.

Nach einer weiteren Ausbildung der Erfindung beträgt die kleinste Öffnungshöhe der Gasdurchtrittsöffnungen zwischen 3 und 13 mm, vorzugsweise im wesentlichen 5 mm. Durch eine solche Dimensionierung der Gasdurchtrittsöffnung sind relativ große Öffnungen geschaffen, die durch Grillgewürze und/oder Grillflüssigkeiten nicht zugesetzt werden können.

Die erfindungsgemäße Grillschale kann besonders einfach dadurch hergestellt werden, daß an den Stellen der gewünschten Gasdurchtrittsöffnungen in den Seitenwänden der Wülste von der der Glut zuzukehrenden Unterseite der Grillschale her Einschnitte oder Durchstiche in die Wulstseitenwände eingebracht und gleichzeitig die Teilabschnitte zu der von der Glut abzukehrenden Oberseite der Grillschale hin eingerollt werden. Das Einrollen der Teilabschnitte kann in einem einzigen Arbeitsgang mit der Herstellung der Grillschale selbst erfolgen.

In der Zeichnung sind besonders vorteilhafte Ausführungsbeispiele der erfindungsgemäßen Grillschale dargestellt, die im folgenden näher beschrieben werden.
- Fig. 1: zeigt eine Draufsicht auf einen Teil der Grillschale dieses Ausführungsbeispieles;
- Fig. 2: ist ein Schnitt durch dieses Ausführungsbeispiel nach Linie II-II in Fig. 1;
- Fig. 3: zeigt eine Seitenansicht von außen auf eine Seitenwand mit einer Gasdurchtrittsöffnung in vergrößerter Darstellung;
- Fig. 4: zeigt einen Schnitt durch einen eingerollten Teilabschnitt nach Linie IV-IV in Fig. 3;
- Fig. 5a bis 5d: zeigen Varianten von Gasdurchtrittsöffnungen.

Die in den Figuren dargestellte Grillschale ist aus einer einstückigen Metallfolie gebildet und hat einen die Grillfläche 1 umgebenden hochgewölbten Rand 2 mit Bördelkante 3. Die Grillfläche hat Saftrillen 4 in gleichen gegenseitigen Abständen mit dazwischenliegenden hochragenden Wülsten 5. Auf den Wulstrücken 6 kommt das Grillgut 7 zur Auflage.

In den ansteigenden Seitenwänden der Wülste 5 sind in vorzugsweise gleichmäßigen Abständen im wesentlichen dreieckige Gasdurchtrittsöffnungen 8 vorgesehen, die zum Durchtritt der heißen Grillgase durch die Grillschale hindurch zu dem auf den Wulstrücken 6 aufliegenden Grillgut 7 dienen. Diese Öffnungen sind durch Einschnitte gebildet, die von der Unterseite der Grillschale her in die Seitenwände der Wülste 5 eingebracht sind, wobei gleichzeitig die Schlitzränder zur Oberseite der Grillschale hin eingerollt sind. Dies kann in Form eines einzigen Arbeitsvorganges mit einem einzigen Schneid- und Rollwerkzeug geschehen.

Die Gasdurchtrittsöffnungen 8 sind in dem dargestellten Ausführungsbeispiel derart versetzt zueinander angeordnet, daß die Gasdurchtrittsöffnungen in einer Seitenwand den Zwischenräumen zwischen den Gasdurchtrittsöffnungen der gegenüberliegenden Seitenwand gegenüberliegen.

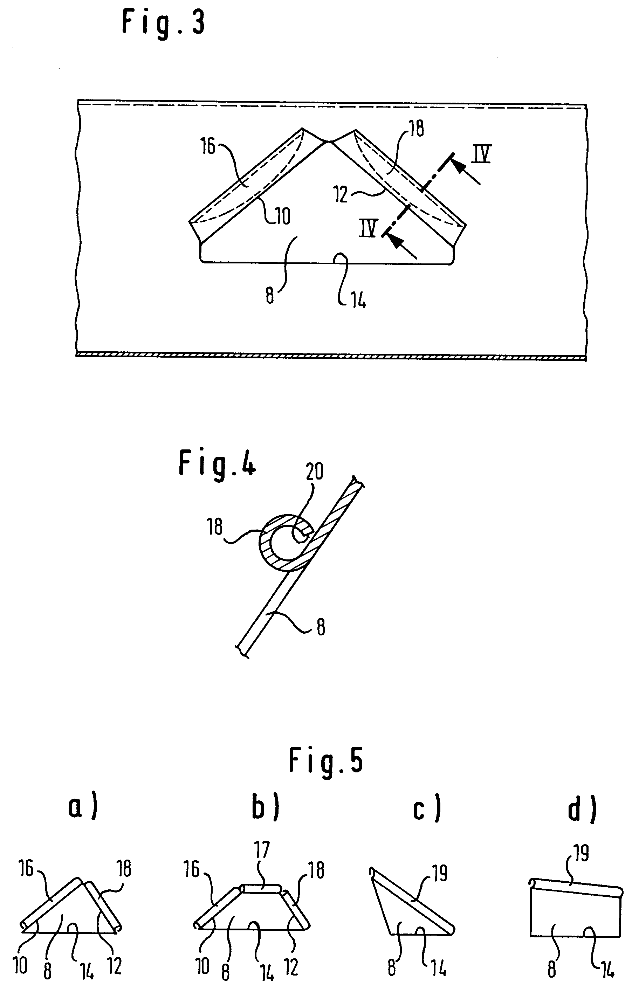

Wie insbesondere in Fig. 3 gut zu erkennen ist, weist jede Gasdurchtrittsöffnung 8 zwei Teilabschnitte 10 und 12 auf, die durch die beiden Katheten der im wesentlichen dreieckigen Gasdurchtrittsöffnung 8 gebildet sind. Die beiden Teilabschnitte 10 und 12 verlaufen unter einem Winkel von im wesentlichen 90° zueinander und sind in einem Winkel von im wesentlichen 45° zur Grillebene angeordnet, die durch die Wulstrücken 6 gebildet wird. Hierbei sind die beiden Teilabschnitte 10 und 12 oberhalb der Gasdurchtrittsöffnung 8 angeordnet, d.h. die untere Basislinie 14 der Gasdurchtrittsöffnung 8, die der Hypotenuse des Dreiecks entspricht, verläuft parallel zur Grillebene.

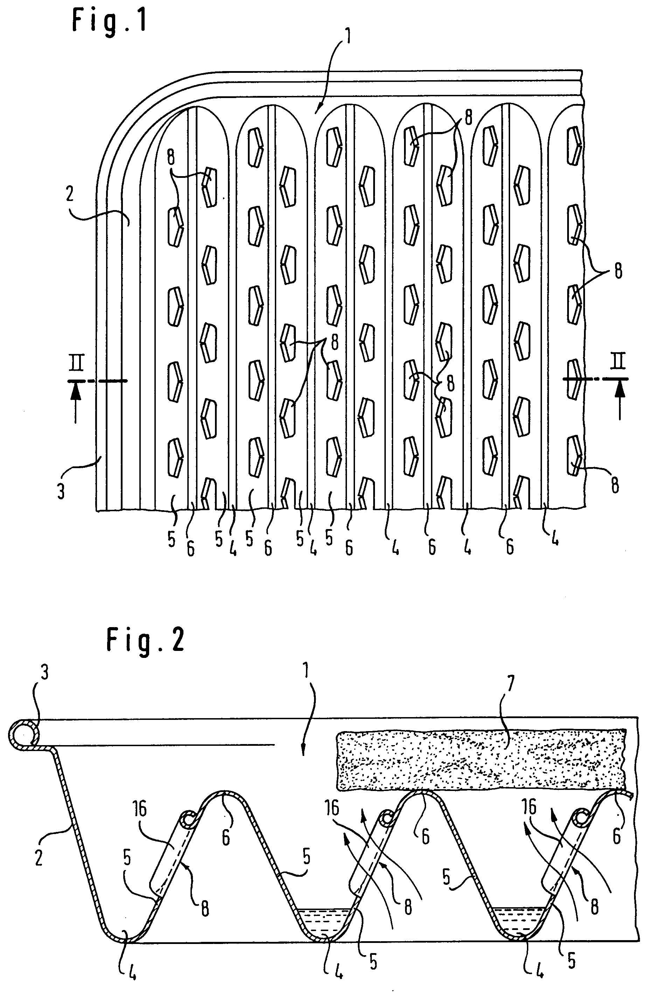

Wie die Fig. 2 bis 4 zeigen, ist jeder Teilabschnitt 10, 12 des Randes der Gasdurchtrittsöffnung 8 zur Grillschalenoberseite hin eingerollt und bildet dort einen rinnenartigen Abschnitt 16 bzw. 18.

Wie insbesondere Fig. 4 zeigt, ist jeder Teilabschnitt soweit eingerollt, daß dessen stirnseitige Kante 20 nicht mehr fühlbar ist.

Fig. 5 zeigt alternative Ausführungsformen der erfindungsgemäßen Gasdurchtrittsöffnung. In Fig. 5a ist eine dreieckige Form dargestellt, die auch in den Fig. 1 bis 4 gezeigt ist. Fig. 5b zeigt eine trapezförmige Anordnung mit einer unteren Basislinie 14 ohne Einrollung und drei Schenkeln mit Einrollungen 16, 17 und 18. In Fig. 5c und 5d ist eine Gasdurchtrittsöffnung 8 mit nur einem eingerollten Teilabschnitt 19 dargestellt, der unter einem Winkel zur Grillebene verläuft. Hierbei sind die nicht eingerollten Ränder der Gasdurchtrittsöffnung 8 so angeordnet, daß diese unterhalb der Einrollung 19 verlaufen, so daß keine Grillflüssigkeit durch die Gasdurchtrittsöffnung 8 austreten kann.

Die kleinste Öffnungsweite der in den Figuren dargestellten Gasdurchtrittsöffnungen beträgt ca. 5 mm, so daß insgesamt relativ große Gasdurchtrittsöffnungen gebildet sind. Gleichzeitig beträgt die Erstreckung der Gasdurchtrittsöffnungen in Richtung der ansteigenden Seitenwände der Wülste 5 nicht mehr als ein Drittel der Wulsthöhe.

Beim Grillen mit der erfindungsgemäßen Grillschale wird ein Grillgut 7 (vgl. Fig. 2) auf die Grillebene gelegt, die durch die Wulstrücken 6 der Wülste 5 gebildet wird. Hierbei können die in Fig. 2 mit Pfeilen angedeuteten Grillgase aus der Glut aufsteigen und durch die Gasdurchtrittsöffnungen 8 ungehindert nach oben strömen, ohne daß diese umgelenkt werden. Gleichzeitig fließt die abtropfende Grillflüssigkeit entlang der Seitenwände der Wülste 5 nach unten und sammelt sich in den Saftrillen 4. Sofern Grillflüssigkeit in Richtung einer Gasdurchtrittsöffnung 8 fließt, wird diese von den Einrollungen, die als "Dachrinnen" wirken, aufgefangen und um die Gasdurchtrittsöffnungen 8 herumgeleitet. Gleichzeitig ist jede Verletzungsgefahr ausgeschlossen, da die stirnseitigen Kanten 20 der Einrollungen soweit eingerollt sind, daß sie nicht mehr fühlbar bzw. sichtbar sind.

Durch die relativ großen Öffnungen haben auch Wärmestrahlen aus dem Glutbett die Möglichkeit, das Grillgut direkt zu erreichen. Dies führt zu einer gleichmäßigeren Bräunung und zu einer Verkürzung der Grillzeit.

## Patentansprüche

1. Grillschale aus einer Metallfolie oder einem Metallband, die voneinander beabstandete Saftrillen (4) mit dazwischenliegenden, hochragenden Wülsten (5) aufweist, wobei die Wulstrücken (6) eine Grillebene bilden und die Wülste (5) in ihren ansteigenden Seitenwänden mit Gasdurchtrittsöffnungen (8) versehen sind,
dadurch **gekennzeichnet,** daß
zumindest ein Teilabschnitt (10, 12) des Randes einer Gasdurchtrittsöffnung (8) zur Grillschalenoberseite hin eingerollt ist.

2. Grillschale nach Anspruch 1,
dadurch **gekennzeichnet,** daß
der Teilabschnitt (10, 12) so weit eingerollt ist, daß dessen stirnseitige Kante (20) nicht mehr fühlbar ist.

3. Grillschale nach einem der Ansprüche 1 oder 2,
dadurch **gekennzeichnet,** daß
der Teilabschnitt (10, 12, 19) unter einem Winkel zur Grillebene verläuft und vorzugsweise oberhalb der Gasdurchtrittsöffnung (8) angeordnet ist.

4. Grillschale nach mindestens einem der vorstehenden Ansprüche,
dadurch **gekennzeichnet,** daß
der Rand zumindest zwei geradlinige Teilabschnitte (10, 12) aufweist, die unter einem Winkel zueinander verlaufen.

5. Grillschale nach mindestens einem der vorstehenden Ansprüche,
dadurch **gekennzeichnet,** daß
die Gasdurchtrittsöffnung (8) eine untere Basislinie (14) aufweist, die keinen eingerollten Rand (16, 18) besitzt und die vorzugsweise parallel zur Grillebene verläuft.

6. Grillschale nach mindestens einem der vorstehenden Ansprüche,
dadurch **gekennzeichnet,** daß
die Gasdurchtrittsöffnung (8) dreieckig, rechteckig oder trapezförmig ausgebildet ist.

7. Grillschale nach mindestens einem der vorstehenden Ansprüche,
dadurch **gekennzeichnet,** daß
die Erstreckung der Gasdurchtrittsöffnungen (8) in Richtung der ansteigenden Seitenwände nicht mehr als ein Drittel der Wulsthöhe beträgt.

8. Grillschale nach mindestens einem der vorstehenden Ansprüche,
dadurch **gekennzeichnet,** daß
die kleinste Öffnungshöhe der Gasdurchtrittsöffnungen (8) zwischen 3 und 13 mm, vorzugsweise im wesentlichen 5 mm beträgt.

9. Verfahren zur Herstellung einer Grillschale nach mindestens einem der vorstehenden Ansprüche,
dadurch **gekennzeichnet,** daß
an den Stellen der gewünschten Gasdurchtrittsöffnungen in den Seitenwänden der Wülste von der der Glut zuzukehrenden Unterseite der Grillschale her Schnitte oder Durchstiche in die Wulstseitenwände eingebracht und gleichzeitig die Teilabschnitte zu der von der Glut abzukehrenden Oberseite der Grillschale hin eingerollt werden.

10. Verfahren nach Anspruch 9,
dadurch **gekennzeichnet,** daß
das Einschneiden oder Durchstechen der Gasdurchtrittsöffnungen und das Einrollen der Teilabschnitte gleichzeitig mit dem Tiefziehen der Grillschale vorgenommen wird.
